# EUROPEAN PATENT APPLICATION

(11) **EP 1 235 019 A1**
(43) Date of publication of application: **28.08.2002**
(21) Application number: 02075488.3
(22) Date of filing: 05.02.2002
(51) Int. Cl.: F16L 15/04

(54) **Assembly of two elements to be connected, element and connecting piece comprising two or more elements connected to each other**

(30) Priority: 23.02.2001 NL 1017440; 22.08.2001 NL 1018800
(71) Applicant: Van der Wel, Pleun Martin, 2678 St De Lier (NL)
(72) Inventor: Van der Wel, Pleun Martin, 2678 St De Lier (NL)
(74) Representative: Mertens, Hans Victor

(57) **Abstract**

The present invention relates to an assembly of two elements to be connected. A first element (2) comprises a sleeve-shaped first end (3) for accommodating a second end (5) with smaller diameter of the second element (4). The first and the second end each comprise in succession a conical part (6,7), a smooth cylindrical part (8,9) and a threaded part (10,11), which parts, during connection of the elements, are intended to face each other and are of a complementary shape. The diameter of the smooth part (8) of the first end is larger than the diameter of the threaded part (11) of the second end. An O-ring (12) is situated in the transitional area between the cylindrical and the conical parts.

## Description

The present invention relates to an assembly of two elements to be connected, a first element comprising a sleeve-shaped first end for accommodating a second end with smaller diameter of the second element, the first and the second end each comprising in succession a conical part, a smooth cylindrical part and a threaded part, which parts during connection of the elements are intended to face each other and are of a complementary shape.

Such an assembly is generally known in the prior art and is used, for example, for connecting pipes that are used for water heating purposes. Such known pipes are connected to each other by inserting the end with smaller diameter of one element, such as a pipe, into the sleeve-shaped part of another element. A sturdy connection of the two elements is obtained by screwing the element that has the end with smaller diameter into the other element.

A problem that often occurs, however, during the connection of such known elements is that the seal obtained is not entirely optimal. For instance, water from the outside often comes into contact with the screw thread and gives rise to corrosion problems. In some cases water seeps in from the outside to such an extent that the water from the outside reaches the inside of an element if said element is a hollow pipe.

It is an object of the present invention to provide an improved seal in the two elements to be connected, in particular hollow pipes.

It is a further object of the present invention to provide an alternative and watertight connection between two elements, in the case of which the elements are easy to connect.

These objects are achieved according to the present invention by an assembly according to the preamble, in which the diameter of the smooth part of the first end is larger than the diameter of the threaded part of the second end, and in which an O-ring is situated in the transitional area between the cylindrical and the conical parts.

Use of the O-ring at the place indicated means that a watertight connection of two elements, for example pipes, can be provided. It has also been found that in the presence of the 0-ring the two elements to be connected according to the invention can be connected to each other in a very simple manner, with the chance of the elements being screwed in askew being substantially ruled out.

It is also pointed out that the use of an O-ring for an improved seal of a connection has already been known per se for a long time. However, if use is made of such an O-ring in the prior art, when the elements are in the connected state, the 0-ring is situated either at the end of the second element or in such a position that the connection of the elements is made much more difficult.

According to a particular preferred embodiment of the assembly according to the present invention, during connection of the elements play is present between the smooth part of the first end and the threaded part of the second end.

The presence of play further facilitates the connection of the elements, owing to the fact that no friction resistance need be overcome between the first and the second end during the connection of the elements, so long as the screw threads of the first and the second end are not yet in engagement with each other. An O-ring fitted on the first or the second end, thanks to the position chosen for it according to the invention, can remain clear of the opposite end until just before the screw threads of the first and the second end are fully in engagement with each other. It has been found that in the case of pipes with, for example, an outside diameter of 51 mm a play of approximately 1 mm around the smooth part is suitable.

According to a further preferred embodiment of the assembly according to the invention, the first end is provided with a groove for at least partial accommodation of the O-ring.

This means that the second element can be inserted easily into the first element, with the good seal being retained.

Instead of being provided in the first end, the groove can also be provided in the second end, with the result that the second end can be made thinner and in this way there can be a saving of material.

The O-ring advantageously rests against the conical part of the second end during connection of the elements.

During the connection of the two elements, the O-ring can therefore be fitted on the first element in such a way that said O-ring rests against the conical part of the second element. The second end can then be inserted into the first end of the element and screwed tight, in which case, owing to the fact that the O-ring is partially accommodated in the groove, a very simple and light connection of the two elements can be obtained, while a very good seal is still ensured.

The screw thread of the second end is preferably rolled screw thread.

This ensures in a simple manner that the screw thread is slightly raised relative to the remainder of the end, in particular the smooth part of the second end, with the result that the desired play can be obtained during connection of the second element to the first element.

It is also preferable according to the present invention for the angle between the smooth part and the conical part of the first and the second end to lie between 15° and 45°, in particular to lie between 25° and 35°, and more particularly to be approximately 30°.

As a result of the above, the conical parts of complementary shape rest smoothly against each other, said conical parts also fulfilling the function of stops that limit the extent to which the second element is screwed into the first element.

According to a very advantageous embodiment of the assembly according to the present invention, the assembly has a substantially uniform diameter on connection of the two elements. This makes the assembly suitable for use in a pipe system over which so-called pipe trucks can be moved, in which case wheels of said pipe trucks can move over the pipes in a substantially shock-free manner.

The invention also relates to an element that is obviously intended for use in an assembly according to the invention.

Especially preferable is an element according to the invention in which said element is a hollow pipe.

The element according to the invention can advantageously be provided with an air vent. As a result, undesired overpressure or under-pressure in the hollow pipe can be equalized in a simple manner during its use in a pipe system, and undesired gases can be removed.

Finally, the present invention relates to a connecting piece comprising two or more interconnected elements according to the invention, a fluid connection being possible through the connecting piece between the elements.

With the aid of the invention, it is possible in a very simple manner to connect elements, such as pipes and/or connecting pieces to each other in a waterproof manner. It will also be understood that an untrained person will be able to make a connection between two pipes or a pipe and a connecting piece in a very simple manner. It will further be understood that if corner pieces, I-pieces and the like are used in conjunction with the elements according to the invention, any desired design of pipe systems can be achieved. In other words, U-bends, crossings, couplings and similar constructions conceivable in the prior art can be produced with the assembly according to the present invention.

The invention will be explained in greater detail below with reference to a drawing, in which:
Fig. 1 shows diagrammatically a cross-sectional view of an assembly of two elements to be connected according to the invention, in a situation before connection; and
Fig. 2 shows a diagrammatic cross-sectional view of a connecting piece according to the present invention, which is connected to two hollow pipes.

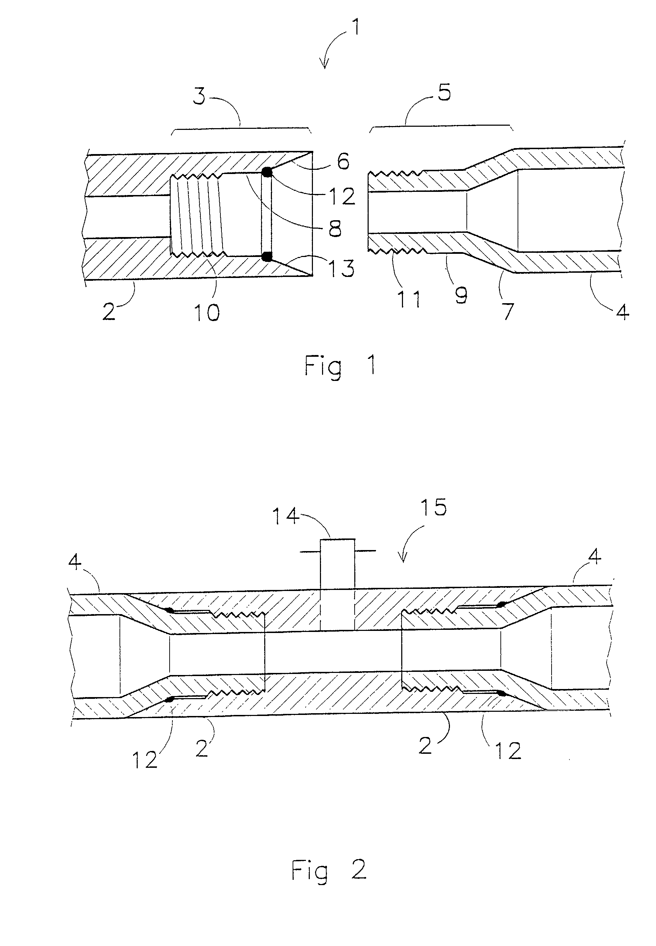

Fig. 1 shows in diagrammatic cross section an assembly 1 of two elements 2, 4 to be connected, hollow pipes in the embodiment shown. Such an assembly will have a uniform outside diameter when connected, and will be suitable, for example, for heating purposes. The first element 2 comprises a sleeve-shaped first end 3 for the accommodation of a second end 5 with smaller diameter of the second element 4. The first end 3 and the second end 5 comprise respectively in succession a conical part 6, 7, a smooth cylindrical part 8, 9, and a threaded part 10, 11, which parts 6, 7, 8, 9, 10, 11 are intended to face each other during connection of the elements 2 and 4, and these parts are also of a complementary shape. The diameter of the smooth part 8 of the first end 3 is larger here than the diameter of the threaded part 11 of the second end 5. The first element 2 in the embodiment shown further comprises in the transitional area between the cylindrical part 8 and the conical part 6 an O-ring 12, which is fitted in a groove 13 prior to the connection. The person skilled in the art will understand that the groove 13 can also be provided in the second element 4, instead of in the first element 2. As a result, the first element 2 can be made thinner, and a saving in material is consequently achieved.

By inserting the second end 5 of the second element 4 into the sleeve-shaped end 3 of the first element 2, and subsequently screwing the two elements 2, 4 tight, the O-ring is pressed against the conical part 7 of the second end 5 of the second element 4.

It will be clear that the O-ring 12 can also be fitted in the transitional area between the cylindrical part 9 and the conical part 7 of the second element 4 prior to connection of the two elements 2, 4.

The angle between the smooth part 9 and the conical part 7 of the second end 5 of the second element 4 will preferably be approximately 30°, which ensures that the elements 2, 4 cannot be screwed in any further once a suitable seal has been obtained. The conical part 6 of the first element 2 is of a complementary shape to the conical part 7, and after connection rests substantially fully against said conical part 7.

After the connection of the elements 2, 4, there will be play between the smooth parts 8 and 9.

It has been found that favourable sealing results are obtained if the first and second ends 3, 5 are dimensioned in such a way that the length of the threaded parts 10, 11 is greater than the length of the smooth cylindrical parts 8, 9.

Fig. 2 shows a connecting piece 15, which comprises two interconnected first elements 2 with sleeve-shaped ends. The connecting piece 15 is of a hollow design, so that a fluid connection is possible through the connecting piece 15. Two hollow pipes 4 are screwed into the connecting piece 15, again, through the use of plastic 0-rings 12, a liquid-tight seal being provided. The connecting piece 15 further comprises an air vent 14, in the form of an air relief cock, by means of which, if the connecting piece 15 together with the two hollow pipes 4 forms part of a closed pipe system, the pipe system can be vented in a simple manner. It goes without saying that the connecting piece 15 can also comprise one or two second elements 4, instead of two first elements 2. The connecting piece 15 can also be in the form of a T-piece, if desired.

Owing to the fact that the connection obtainable in Fig. 1 and obtained in Fig. 2 has a uniform diameter, these connections are exceptionally suitable for pipes over which so-called pipe trucks can be moved, in which case wheels of said pipe trucks move over the pipes.

It should be clear that the assembly and connecting piece according to the present invention described above can be varied in many ways. A very good watertight connection is always obtained in the process, said watertight connection being obtained, on the one hand, by the fact that the two conically designed parts rest against each other and, on the other hand, through use of the O-ring. The connection of the two elements according to the present invention is extremely light and simple here, and a suitable centring of the two elements before the two elements are screwed tight is obtained through the use of the smooth parts 8 and 9.

## Claims

1. Assembly (1) of two elements (2, 4) to be connected, a first element (2) comprising a sleeve-shaped first end (3) for accommodating a second end (5) with smaller diameter of the second element (4), the first (3) and the second (5) end each comprising in succession a conical part (6, 7), a smooth cylindrical part (8, 9) and a threaded part (10, 11), which parts (6, 7, 8, 9, 10, 11), during connection of the elements (2, 4), are intended to face each other and are of a substantially complementary shape, **characterized in that** the diameter of the smooth part (8) of the first end (3) is larger than the diameter of the threaded part (11) of the second end (5), and **in that** an O-ring (12) is situated in the transitional area between the cylindrical (8, 9) and the conical (6, 7) parts.

2. Assembly according to claim 1, **characterized in that** during connection of the elements (2, 4) play is present between the smooth part (8) of the first end (3) and the threaded part (11) of the second end (5).

3. Assembly according to claim 1 or 2, **characterized in that** the first end (3) is provided with a groove (13) for at least partial accommodation of the 0-ring (12).

4. Assembly according to claim 3, **characterized in that** the O-ring (12) rests against the conical part (7) of the second end (5) during connection of the elements (2, 4).

5. Assembly according to one or more of the preceding claims, **characterized in that** the screw thread of the second end (5) is rolled screw thread.

6. Assembly according to one or more of the preceding claims, **characterized in that** the angle between the smooth part (8, 9) and the conical part (6, 7) of the first (3) and the second (5) end lies between 15° and 45°, in particular lies between 25° and 35°, and more particularly is substantially 30°.

7. Assembly according to one or more of the preceding claims, **characterized in that** the assembly (1) has a substantially uniform diameter on connection of the two elements (2, 4).

8. Element (2, 4), obviously intended for use in the assembly (1) according to one or more of the preceding claims.

9. Element according to claim 8, **characterized in that** said element is a hollow pipe.

10. Element according to claim 9, **characterized in that** said element is provided with an air vent (14).

11. Connecting piece (15) comprising two or more interconnected elements (2, 3) according to one or more of the preceding claims 8 - 10, in which a fluid connection is possible through the connecting piece (15) between the elements (2, 4).
